# EUROPEAN PATENT SPECIFICATION

(11) **EP 2 995 671 B1**
(45) Date of publication and mention of the grant of the patent: **17.07.2024**
(21) Application number: 15184779.5
(22) Date of filing: 11.09.2015
(51) Int. Cl.: C09K 21/04, C08K 3/30, C08L 97/02

(54) **FIRE RESISTANT BOARD AND METHOD FOR MANUFACTURING A FIRE RESISTANT BOARD**
FEUERRESISTENTE PLATTE UND VERFAHREN ZUR HERSTELLUNG VON EINER FEUERRESISTENTEN PLATTE
PANNEAU IGNIFUGÉ ET PROCÉDÉ DE FABRICATION D'UN PANNEAU IGNIFUGÉ

(30) Priority: 12.09.2014 BE 201400688
(43) Date of publication of application: 16.03.2016
(73) Proprietor: Unilin, BV, 8710 Wielsbeke (BE)
(72) Inventor: NEL, Koen, 8500 Kortrijk (BE)
(74) Representative: Unilin Technologies

(56) References cited:
- WO-A1-91/09093
- FR-A- 1 339 026
- US-A- 4 552 803
- US-A- 5 008 365
- US-A- 5 130 184
- US-A1- 2014 121 306

## Description

The invention relates to a fire-retardant board, as well as to a method for manufacturing a fire-retardant board.

The invention relates to a fire-retardant board of the type which comprises a cellulose-containing material, a binding agent and fire retardants. Such fire-retardant boards are known.

For example, it is known to treat the cellulose-containing material of a board with phosphorus-based salts, as a powder and/or in solution. The oxidation of phosphorus and the formation of a charred layer have a strong fire-retarding effect. Examples of phosphorus-based salts are mono-ammonium phosphate, di-ammonium phosphate and ammonium polyphosphate.

A general problem, however, is that due to the flame-retardant character of phosphorus-based salts, the smoke production mostly is higher in such boards.

The smoke production from boards which are exposed to fire forms an important element in the fire safety of buildings. Strong smoke formation reduces the chance of a safe evacuation of a burning building. In fact, visibility is strongly reduced. Moreover, smoke gasses may have an irritating or even toxic effect.

In order to reduce smoke development, it is suggested to add smoke suppressants to the cellulose-containing material. The smoke suppression may take place in the gas phase and/or the condensed phase. In the gas phase, either the soot precursors or the soot itself is eliminated. In the condensed phase, smoke may be suppressed by intumescent systems, by diluting the smoke-forming materials or by effective chemical bonding with the soot particles.

Known smoke suppressants are, amongst others, molybdenum- and tin-containing chemicals, zinc borate, huntite and hydromagnesite, zinc hydroxy stannate and ferrocene.

However, the known smoke suppressants are inadequate. In such boards, wherein the cellulose-containing material is treated with phosphorus-based salts, addition of smoke suppressants may lead to an increased heat production in case of fire. Smoke suppressants may also have a negative influence on the hardening of the binding agent which is added to the cellulose-containing material. Also, many smoke suppressants cannot be brought into solution.

Moreover, smoke suppressants have to be added to the cellulose-containing material in powder form with a very fine granulation, for example, with a grain size of less than 50 microns, in order to guarantee the smoke-suppressing effect thereof. In fact, smoke suppressants increase their effect with finer granulation. When manufacturing cellulose-containing boards, in particular with chipboards and OSB boards, the addition of the fine powder, however, results in a reduced gluing of the cellulose-containing material. Also, adding that fine powder may result in problems when strewing wood chips or wood strands. Another disadvantageous effect is an inappropriate distribution of the smoke suppressants across the thickness of the board.

Document US 4 552 803 A discloses a fire-retardant composition, which comprises a powder resin. The powder resin is a reaction product which is obtained on the basis of the following materials: an aldehyde, an ammonium phosphate, a hydroxy reactant, a urea reactant, an ammonium- or alkaline metal- or alkaline earth metal-based composition or salt, and a phosphoric acid. US `803 describes a number of specific examples of powder resins. In one of these specific examples, namely example 2, amongst others, the materials melamine, di-ammonium phosphate and magnesium sulfate are applied for forming the powder resin. Although melamine here is mentioned as a reactant, document US `803 does not teach that the reaction product resulting therefrom, i.e. the powder resin, can be applied together with a melamine-based binding agent. More particularly, document US `803 does not describe that the powder resin is compatible with binding agents which are applied for binding the cellulose-containing material in a board, such as a chipboard, an MDF or HDF board, or an OSB board. It may be that the powder resin has an adverse influence on the hardening of such binding agents. Apart therefrom, it is also noted that US `803 does not attribute any smoke-suppressing features to the fire-retardant composition.

WO 91/09093 A1 discloses a fire-retarding solution, which is obtained on the basis of the following materials: an inorganic oxygen-containing metal composition, a metal salt, an organic acid or anhydride. Document WO `093 describes a number of specific examples of such fire-retardant solution. In the first example described therein, the materials magnesium oxide, magnesium chloride and acetic acid are applied for forming the fire-retardant solution. In the third described example, this fire-retardant solution is applied for manufacturing a fire-retardant wooden chipboard. The chipboard is manufactured by impregnating the wooden chips in the fire-retardant solution and subsequently drying them. The dried chips are blended with melamine glue powder and subsequently are compressed. Although the drying of the chips here is performed after impregnating the chips in the fire-retardant solution, in an industrial chipboard production site this mostly is reversed: the drying of the chips is performed after adding fire retardants, binding agents and/or other additives. As a result, the use of such fire-retardant solutions in practice may show the disadvantage that the solution provides too high moisture content when pressing the chips. The chips provided with the solution in fact are no longer dried before being compressed. It is also noted that document WO '093 does not associate any smoke-suppressing features with the fire-retardant solution.

FR 1 339 026 A discloses the use of magnesium sulfate and alkaline roasted magnesite for making wood fibers fire-retardant. However, FR '026 does not associate any smoke-suppressing features with the fire-retardant solution.

The invention primarily aims at an improved fire-retardant board of the above-mentioned type, wherein according to various preferred embodiments a solution can be obtained for the aforementioned or other problems with the fire-retardant boards of the state of the art.

To this aim, the invention is set out in the appended set of claims. The smoke development from boards, according to the invention as defined in claim 1, which are exposed to fire, is reduced. Also, this board offers an increased fire-retardant activity due to a synergetic effect in respect to the formation of char and an associated reduction of mass loss and smoke formation. This board also provides for that the heat development does not increase during a fire. Apart therefrom, this board results in reducing the pre-cure or pre-polymerization of the binding agent.

The term "fire-retardant board" is understood as a board having fire-retardant and preferably also smoke-suppressing features.

The term "fire retardant" is understood as a material which is added to an inflammable material with the intention of significantly reducing the inflammability of this material, and/or with the intention of significantly retarding the inflammation of the material, and/or with the intention of reducing other disadvantageous effects during a fire, for example, smoke development.

The term "fire retardant" primarily indicates any material which may cause one or more of the following operations:
- removing H- and OH-radicals;
- decelerating or preventing pyrolysis;
- forming a protective layer on the material,
- releasing nitrogen or other non-inflammable gasses, which shield oxygen from the air from the burning or inflammable material;
- releasing water, such that the burning or inflammable material is cooled and consequently heat (energy) is discharged;
- retarding smoke development.

According to a preferred embodiment, the fire-retardant board further also shows the characteristic that the fire retardants also comprise a reaction product of the phosphorus-based salt and magnesium sulfate.

The term "reaction product" is used for indicating that product which is obtained after reaction of at least two reagents and which is separated from the reaction medium by conventional separation methods. Therein, still a part of one or more reagents may be present in the reaction product. More particularly, the term "reaction product" indicates the mixture that is obtained after reaction of the reagents and can consist of one or more products which can be formed by the reagents.

According to a preferred embodiment, the fire-retardant board further also shows the characteristic that the weight percentage of magnesium sulfate in respect to the phosphorus-based salt is situated between 1% and 45%, in particular between 2.5% and 15%. The inventor has found that in particular with this characteristic the advantages described in preceding paragraphs will be quite pronounced.

According to a preferred embodiment, the fire-retardant board further also shows the characteristic that the weight percentage of phosphorus-based salt in respect to the cellulose-containing material and the binding agent is situated between 5% and 20%, in particular between 8% and 15%.

According to a preferred embodiment, the fire-retardant board further also shows the characteristic that the fire-retardant board belongs to the s1 smoke class.

According to the European standard NEN-EN 13501-1, three smoke classes are distinguished, being the classes s1, s2 and s3. Products, which are classified in class s1, s2 or s3, are characterized by a small, a medium or a high smoke production, respectively.

According to a preferred embodiment, the fire-retardant board further also shows the characteristic that the phosphorus-based salt is present in the board substantially in powder form. Due to this characteristic, the phosphorus-based salt will remain present in the board substantially as a nonreacted material. The inventor has found that hereby particularly good results are obtained.

In particular, the phosphorus-based salt, or at least the majority of the weight of the phosphorus-based salt, has a grain size situated between 50 and 2000 microns, in particular between 100 and 1000 microns. With such grain size, the disadvantages which occur when adding fine powder, such as reduced gluing, problems with strewing of wood chips or wood strands, and an inappropriate distribution of the fire-retardants over the thickness of the board, are avoided, and such in particular with chipboards and OSB boards.

According to a preferred embodiment, the fire-retardant board further also shows the characteristic that the magnesium sulfate is present in the board substantially in powder form. Due to this characteristic, magnesium sulfate will remain present in the board substantially as a nonreacted material. The inventor has found that hereby particularly good results are obtained.

In particular, the magnesium sulfate, or at least the majority of the weight of the magnesium sulfate, has a grain size situated between 50 and 2000 microns, in particular between 100 and 1000 microns. The inventor has found that magnesium sulfate, with such granulometry, guarantees the smoke-suppressing effect thereof. This means that magnesium sulfate does not have to be added in fine form, for example, with a grain size smaller than 50 microns, to the cellulose-containing material during the manufacture of the board. In this way, the above-mentioned disadvantages when adding fine powder, such as reduced gluing, problems with strewing of wood chips or wood strands, and an inappropriate distribution of the fire-retardants over the thickness of the board, are avoided, in particular with chipboards and OSB boards.

According to a preferred embodiment, the fire-retardant board further also shows the characteristic that the phosphorus-based salt and the magnesium sulfate are present in the board substantially in powder form and that the phosphorus-based salt and the magnesium sulfate are present in the board substantially separate from each other. The term "substantially separate" is used to indicate that the phosphorus-based salt and the magnesium sulfate are present in the board substantially as nonreacted materials. This means that little to no reaction products of these materials can be found in the board. By "substantially" is meant that at least 50% of the weight of the phosphorus-based salt, as well as 50% of the weight of magnesium sulfate, are present in the board as nonreacted materials.

In the production of chipboard, the fire retardants can be mixed with cellulose-containing material. The fire retardants preferably are added in powder form to the cellulose-containing material with which they are mixed. Adding the fire retardants in solution in fact may induce a too high moisture content when pressing the chipboard. In fact, it is so that the wood chips, after adding the fire retardants and the binding agent, typically are not dried before being pressed. The addition of binding agent may take place before or after providing the fire retardants, however, preferably takes place after the wood chips have been mixed with the fire retardants.

According to a preferred embodiment, the fire-retardant board further also shows the characteristic that the board is manufactured by providing the phosphorus-based salt in solution on the cellulose-containing material.

According to a preferred embodiment, the fire-retardant board further also shows the characteristic that the board is manufactured by providing the magnesium sulfate in solution on the cellulose-containing material.

In the production of MDF or HDF board, the fire retardants can be mixed with cellulose-containing material during displacement under the influence of a pressure difference, such as, for example, in the "blow line" or blowing line, a conduit through which the wood fibers are blown at high speed. The fire retardants preferably are added in solution to the cellulose-containing material with which they are mixed. MDF is made according to the so-called dry process, wherein the wood fibers are mixed with binding agent and are pressed in dry condition. The addition of binding agent may be performed before or after providing the solution with the fire retardants.

According to a preferred embodiment, the fire-retardant board further also shows the characteristic that the magnesium sulfate is present in the board as a hydrate. By this characteristic, the temperature is reduced during a fire. In fact, magnesium sulfate in this form is chemically coupled to water.

According to a preferred embodiment, the fire-retardant board further also shows the characteristic that the magnesium sulfate is present in the board in anhydride form.

According to a preferred embodiment, the fire-retardant board further also shows the characteristic that the binding agent comprises melamine-urea formaldehyde (MUF) glue, an in particular substantially or entirely consists thereof.

According to a preferred embodiment, the fire-retardant board further also shows the characteristic that the phosphorous-based salt is a phosphate salt. In particular, the phosphate salt is mono-ammonium phosphate, di-ammonium phosphate or ammonium polyphosphate.

Mono-ammonium phosphate is shortened to the term "MAP" (mono-ammonium phosphate) and relates to a chemical compound with the gross formula H₆NO₄P and CAS number 7722-76-1. MAP is applied in solid condition with a pureness higher than 90%. Preferably, the pureness of MAP is higher than 95%. More preferably, the pureness of MAP is higher than 98%.

Di-ammonium phosphate is shortened to the term "DAP" (di-ammonium phosphate) and relates to a chemical compound with the gross formula (NH₄)₂HPO₄ and CAS number 7783-28-0. DAP is applied in solid condition with a pureness higher than 90%. Preferably, the pureness of DAP is higher than 95%. More preferably, the pureness of DAP is higher than 98%.

Ammonium polyphosphate is shortened to the term "APP" (ammonium polyphosphate) and relates to all chemical compounds fulfilling the gross formula [NH₄PO₃]ₙ, wherein n is an integer between 2 and 1,000,000. Preferably, n is an integer between 2 and 100,000. More preferably, n is an integer between 2 and 10,000. APP is an inorganic salt of polyphosphoric acid and ammonia. APP may be chain-shaped or branched. The indication "short-chain" relates to the number of units n present in the polyphosphate chain, wherein n < 100. APP is applied in solid condition with a pureness higher than 90%. Preferably, the pureness of APP is higher than 95%. More preferably, the pureness of APP is higher than 98%.

According to the invention, the fire-retardant board shows the characteristic that the cellulose-containing material consists of any of the following materials: wood, wood fibers, wood chips, cellulose fibers, flax or a component of flax, such as flax shives, and that the board is a chipboard, an OSB board, a fiberboard or a wooden board, in particular an MDF or HDF board.

The term "chipboard" is used to indicate any board which is made at least of wood-based, in particular wood chips and smaller wood particles, such as sawdust, or wood-like particles, and a binding agent, mostly a synthetic resin. Chipboard preferably is made by blending a synthetic resin glue with chips and solidifying it under high pressure and temperature > 150°C. Chipboard preferably has a density between 600 kg/m³ and 800 kg/m³.

The term "OSB" (Oriented Strand Board) is applied to any panel comprising wide, thin wood strands strewn in a specific orientation. An OSB panel relates to any panel made of crosswise-oriented layers of thin, large wood strands which are blended with a resin and additives and subsequently are compressed.

The term "fiberboard" is used to indicate any board which is composed of fibers or fiber bundles with a binding agent added thereto. Basically, all kinds of fibers can be applied, for example, however, not limited to, wood, straw, flax, hemp and bagasse. Some examples of a fiberboard are, however, not limited to, MDF or HDF board, hardboard, flexible or rigid wood fiber insulation, softboard.

The term "MDF" (Medium Density Fiberboard) is applied to any panel on the basis of wood fibers within a certain density class, which is obtained after compressing dried fibers. The volume density of MDF board is between 400 kg/m³ and 800 kg/m³. MDF is a wooden panel formed at high pressure and temperature on the basis of hardwood or softwood fiber bundles and a resin or binding resin.

The term "HDF" (High Density Fiberboard) is applied to any panel on the basis of wood fibers within a certain density class, which is obtained after compressing dried fibers. The volume density of HDF board is between 800 kg/m³ and 1000 kg/m³. HDF is a wooden panel formed at high pressure and temperature on the basis of hardwood or softwood fiber bundles and a resin or binding resin.

According to a preferred embodiment, the fire-retardant board further also shows the characteristic that the magnesium sulfate, or at least the majority of the weight of the magnesium sulfate, has a grain size which is situated between 50 and 2000 microns, in particular between 100 and 1000 microns. The inventor has found that with such granulometry, magnesium sulfate guarantees the smoke-suppressing effect thereof. This means that magnesium sulfate must not be added to the cellulose-containing material during manufacture of the board in a fine form, for example, with a grain size smaller than 50 microns. In this manner, the disadvantages mentioned above when adding fine powder, such as reduced gluing, problems with strewing of wood chips or wood strands, and an inappropriate distribution of the fire retardants across the thickness of the board, can be avoided, in particular with chipboards and OSB boards.

According to a preferred embodiment, the fire-retardant board also shows the characteristic that the magnesium sulfate is present in the board substantially in powder form. Due to this characteristic, magnesium sulfate is present in the board substantially as a nonreacted material. The inventor has found that good results are obtained in particular in this form.

According to a preferred embodiment, the fire-retardant board further also shows the characteristic that the weight percentage of magnesium sulfate in respect to the cellulose-containing material and the binding agent is situated between 0.05% and 10%, in particular between 0.2% and 2.5%. The inventor has found that in particular with this characteristic the advantages described in preceding paragraphs are quite pronounced.

According to a preferred embodiment, the fire-retardant board further also shows the characteristic that the magnesium sulfate is present in the board as a hydrate. Due to this characteristic, the temperature in case of fire is reduced. In fact, magnesium sulfate is chemically coupled to water in this form.

According to a preferred embodiment, the fire-retardant board further also shows the characteristic that the magnesium sulfate is present in the board in anhydride form.

According to a preferred embodiment, the fire-retardant board further also shows the characteristic that the binding agent comprises melamine urea formaldehyde (MUF) glue and in particular substantially or entirely consists thereof.

The invention also relates to a method, as defined in claim 13, for manufacturing a fire-retardant board such as described in preceding paragraphs, with the characteristic that the binding agent and the fire retardants are brought into contact with the cellulose-containing material and that the cellulose-containing material, together with the binding agent and the fire retardants, is pressed.

It is to be noted that the aforementioned characteristics related to the fire retardants, for example, weight percentages and grain sizes, in particular characterize the fire retardants in the finished fire-retardant board. In other words, these characteristics are valid after the cellulose-containing material, together with the binding agent and the fire retardants, is pressed, thus, in the final product.

However, the invention does not exclude that the aforementioned characteristics characterize the state of the fire retardants with which they are brought into contact with the cellulose-containing material. In other words, these characteristics may also be valid before the cellulose-containing material, together with the binding agent and the fire retardants, is pressed. It is not excluded that, when the fire retardants according to the above-mentioned characteristics are brought into contact with the cellulose-containing material, the features of the fire retardants in the finished fire-retardant board deviate from these characteristics.

### EXAMPLES

### Method for fabricating test boards

Wood chips are produced by chipping coniferous wood by means of a knife ring flaker. The wood chips were dried until a moisture content of maximum 3% was obtained. Subsequently, the wood chips were divided into fractions by means of a flat sieve. The fraction obtained by combining the sieve fractions with sieve mesh between 850 µm and 2000 µm, was used as a basic material in the steps following hereafter and is indicated by the term "chip material".

Fire retardants were added in powder form to 1200 g of chip material and blended therewith. Simultaneously, the chip material was mechanically mixed with a MUF (Melamine urea formaldehyde) glue with 16% of melamine. Herein, 10% of MUF glue (on the basis of dry matter) was dosed onto the chip material, with the addition of 5% ammonium nitrate hardener in respect to the amount of MUF glue (solid matter to solid matter).

The thus obtained chip material was distributed uniformly in a pressing mold and was pressed on a press at a pressure of 6 N/mm² and a temperature of 200°C during 120 seconds. Thus, board having a thickness of 12 mm and a volume weight of 700 kg/m³ +/- 15 kg/m³ was obtained.

Test specimen for performing fire tests were sawn from the test boards, with dimensions of 100 mm length and 100 mm width. These test specimen were air-conditioned in a climatic chamber, at a temperature of 20°C and 50% relative humidity, to equilibrium moisture content.

### COMPARATIVE EXAMPLE 1 according to the prior art

As a fire retardant, MAP was added to the chip material, with a weight percentage of 12% in respect to the chip material.

### EXAMPLE 2 according to the invention

As a fire retardant, MAP was added to the chip material, with a weight percentage of 12% in respect to the chip material. Also, magnesium sulfate was added to the chip material, with a weight percentage of 0.5% in respect to the chip material.

### EXAMPLE 3 according to the invention

As a fire retardant, MAP was added to the chip material, with a weight percentage of 12% in respect to the chip material. Also, magnesium sulfate was added to the chip material, with a weight percentage of 1.0% in respect to the chip material.

### Smoke tests by means of a cone calorimeter

A board fabricated according to the procedure as described herein above was placed horizontally underneath a radiation cone and was exposed to a constant radiation intensity of 35 kW. Hereby, pyrolytic gases may be created, which are ignited by means of a spark igniter. The board was located at a distance of 25 mm from the radiation cone. The board was exposed to the radiation during 1500 seconds.

The overall smoke production could be measured via the suctioned smoke. At the same time, the number of seconds was noted, starting from the start of the smoke test, after which smoke appeared and was perceived optically.

The results of the smoke tests on specimen prepared as described herein above with the different types of fire retardants are represented in Table 1.

**Table 1. The overall smoke production expressed in m²/m² and the time of smoke appearance expressed in s.**

| Test | Type of fire retardant | Overall smoke production (m²/m²) | Time of appearance (s) |
|---|---|---|---|
| 1 | EXAMPLE 1 | 177.8 | 90 |
| 2 | EXAMPLE 2 | 138.1 | 80 |
| 3 | EXAMPLE 3 | 138.2 | 710 |

From the results from table 1, it is evident that the use of the fire retardants MAP and magnesium sulfate (EXAMPLE 2 and EXAMPLE 3, test 2 and test 3, respectively) considerably reduces the overall smoke production during the smoke test in comparison to the use of known fire retardants on the basis of MAP alone (EXAMPLE 1, test 1).

Moreover, from the results from table 1 it is evident that for the test board with a percentage by weight of magnesium sulfate of 1% in respect to the chip material (EXAMPLE 3, test 3) in comparison to test 1 and 2 the time until smoke appearance increases considerably.

## Claims

1. Fire-retardant board, which comprises a cellulose-containing material, a binding agent and fire retardants, wherein the cellulose-containing material consists of any of the following materials: wood, wood fibers, wood chips, wood strands, cellulose fibers, flax or a component of flax, such as flax shives; and that the board is a chipboard, an OSB board, a fiberboard or a wooden board, in particular an MDF or HDF board, wherein the binding agent is a melamine-based binding agent; and wherein the fire retardants are present in the board, **characterized in that** said fire retardants consist at least of a phosphorus-based salt and magnesium sulfate.

2. Fire-retardant board according to claim 1, **characterized in that** the fire retardants also comprise a reaction product of the phosphorus-based salt and magnesium sulfate.

3. Fire-retardant board according to claim 1 or 2, **characterized in that** the weight percentage of magnesium sulfate in respect to the phosphorus-based salt is situated between 1% and 45%, in particular between 2.5% and 15%.

4. Fire-retardant board according to any of the preceding claims, **characterized in that** the weight percentage of phosphorus-based salt in respect to the cellulose-containing material and the binding agent is situated between 5% and 20%, in particular between 8% and 15%.

5. Fire-retardant board according to any of the preceding claims, **characterized in that** the fire-retardant board pertains to the s1 smoke class.

6. Fire-retardant board according to any of the preceding claims, **characterized in that** the phosphorus-based salt and/or the magnesium sulfate is present in the board substantially in powder form.

7. Fire-retardant board according to claim 6, **characterized in that** the phosphorus-based salt is present in the board substantially in powder form; and that the phosphorus-based salt, or at least the majority of the weight of the phosphorus-based salt, has a grain size which is situated between 50 and 2000 microns, in particular between 100 and 1000 microns.

8. Fire-retardant board according to claim 6 or 7, **characterized in that** the magnesium sulfate is present in the board substantially in powder form; and that the magnesium sulfate, or at least the majority of the weight of the magnesium sulfate, has a grain size which is situated between 50 and 2000 microns, in particular between 100 and 1000 microns.

9. Fire-retardant board according to any of the preceding claims, **characterized in that** the phosphorus-based salt and the magnesium sulfate are present in the board substantially in powder form; and that the phosphorus-based salt and the magnesium sulfate are present in the board substantially separate from each other.

10. Fire-retardant board according to any of the claims 1 to 5, **characterized in that** the board is manufactured by providing the phosphorus-based salt and/or the magnesium sulfate in solution on the cellulose-containing material.

11. Fire-retardant board according to any of the preceding claims, **characterized in that** the binding agent comprises melamine urea formaldehyde (MUF) glue, and in particular consists thereof for the major part or entirely.

12. Fire-retardant board according to any of the preceding claims, **characterized in that** the phosphorus-based salt is a phosphate salt, preferably mono-ammonium phosphate, di-ammonium phosphate or ammonium polyphosphate.

13. Method for manufacturing a fire-retardant board according to any of the preceding claims, **characterized in that** the binding agent and the fire retardants are brought into contact with the cellulose-containing material; and that the cellulose-containing material, together with the binding agent and the fire retardants, is pressed.

## Patentansprüche

1. Feuerhemmende Platte, die ein zellulosehaltiges Material, ein Bindemittel und feuerhemmende Mittel umfasst, wobei das zellulosehaltige Material aus einem der folgenden Materialien besteht: Holz, Holzfasern, Holzspäne, Holzstrands, Zellulosefasern, Flachs oder einem Bestandteil von Flachs, wie z.B. Flachsschäben; und wobei die Platte eine Spanplatte, eine OSB-Platte, eine Faserplatte oder eine Holzplatte, insbesondere eine MDF- oder HDF-Platte, ist; wobei das Bindemittel ein Bindemittel auf Melaminbasis ist; und wobei die feuerhemmenden Mittel in der Platte vorhanden sind, **dadurch gekennzeichnet, dass** die feuerhemmenden Mittel zumindest aus einem Salz auf Phosphorbasis und Magnesiumsulfat bestehen.

2. Feuerhemmende Platte nach Anspruch 1, **dadurch gekennzeichnet, dass** die feuerhemmenden Mittel auch ein Reaktionsprodukt aus dem Salz auf Phosphorbasis und Magnesiumsulfat umfassen.

3. Feuerhemmende Platte nach Anspruch 1 oder 2, **dadurch gekennzeichnet, dass** der Gewichtsprozentsatz an Magnesiumsulfat, bezogen auf das Salz auf Phosphorbasis, zwischen 1 % und 45 %, insbesondere zwischen 2,5 % und 15 %, liegt.

4. Feuerhemmende Platte nach einem der vorhergehenden Ansprüche, **dadurch gekennzeichnet, dass** der Gewichtsprozentsatz des Salzes auf Phosphorbasis in Bezug auf das zellulosehaltige Material und das Bindemittel zwischen 5 und 20 %, insbesondere zwischen 8 und 15 % liegt.

5. Feuerhemmende Platte nach einem der vorhergehenden Ansprüche, **dadurch gekennzeichnet, dass** die feuerhemmende Platte der Brandverhaltensklasse s1 angehört.

6. Feuerhemmende Platte nach einem der vorhergehenden Ansprüche, **dadurch gekennzeichnet, dass** das Salz auf Phosphorbasis und/oder das Magnesiumsulfat in der Platte im Wesentlichen in Pulverform vorliegt/vorliegen.

7. Feuerhemmende Platte nach Anspruch 6, **dadurch gekennzeichnet, dass** das Salz auf Phosphorbasis in der Platte im Wesentlichen in Pulverform vorliegt; und dass das Salz auf Phosphorbasis oder zumindest der größte Teil des Gewichts des Salzes auf Phosphorbasis eine Korngröße aufweist, die zwischen 50 und 2000 Mikron, insbesondere zwischen 100 und 1000 Mikron liegt.

8. Feuerhemmende Platte nach Anspruch 6 oder 7, **dadurch gekennzeichnet, dass** das Magnesiumsulfat in der Platte im Wesentlichen in Pulverform vorliegt; und dass das Magnesiumsulfat oder zumindest der größte Teil des Gewichts des Magnesiumsulfats eine Korngröße aufweist, die zwischen 50 und 2000 Mikron, insbesondere zwischen 100 und 1000 Mikron liegt.

9. Feuerhemmende Platte nach einem der vorhergehenden Ansprüche, **dadurch gekennzeichnet, dass** das Salz auf Phosphorbasis und das Magnesiumsulfat in der Platte im Wesentlichen in Pulverform vorliegen; und dass das Salz auf Phosphorbasis und das Magnesiumsulfat in der Platte im Wesentlichen getrennt voneinander vorliegen.

10. Feuerhemmende Platte nach einem der Ansprüche 1 bis 5, **dadurch gekennzeichnet, dass** die Platte hergestellt wird, indem das Salz auf Phosphorbasis und/oder das Magnesiumsulfat in Lösung auf das zellulosehaltige Material aufgebracht wird.

11. Feuerhemmende Platte nach einem der vorhergehenden Ansprüche, **dadurch gekennzeichnet, dass** das Bindemittel Melamin-Harnstoff-Formaldehyd (MUF)-Leim umfasst und insbesondere zum größten Teil oder vollständig daraus besteht.

12. Feuerhemmende Platte nach einem der vorhergehenden Ansprüche, **dadurch gekennzeichnet, dass** das Salz auf Phosphorbasis ein Phosphatsalz, vorzugsweise Monoammoniumphosphat, Diammoniumphosphat oder Ammoniumpolyphosphat ist.

13. Verfahren zur Herstellung einer feuerhemmenden Platte nach einem der vorhergehenden Ansprüche, **dadurch gekennzeichnet, dass** das Bindemittel und die feuerhemmenden Mittel mit dem zellulosehaltigen Material in Kontakt gebracht werden und dass das zellulosehaltige Material zusammen mit dem Bindemittel und den feuerhemmenden Mitteln verpresst wird.

## Revendications

1. Panneau ignifuge qui comprend une matière contenant de la cellulose, un agent liant et des retardateurs de flammes, dans lequel la matière contenant de la cellulose est constituée par l'une quelconque des matières suivantes, à savoir : du bois, des fibres de bois, des copeaux de bois, des brins de bois, des fibres de cellulose, du lin ou un composant du lin, tel que des anas de lin ; et dans lequel le panneau est un panneau de particules agglomérées, un panneau OSB, un panneau de fibres ou un panneau de bois, en particulier un panneau MDF ou HDF; dans lequel l'agent liant est un agent liant à base de mélamine ; et dans lequel les retardateurs de flammes sont présents dans le panneau, **caractérisé en ce que** lesdits retardateurs des flammes sont constitués au moins par un sel à base de phosphore et du sulfate de magnésium.

2. Panneau ignifuge selon la revendication 1, **caractérisé en ce que** les retardateurs des flammes comprennent également un produit de la réaction du sel à base de phosphore et du sulfate de magnésium.

3. Panneau ignifuge selon la revendication 1 ou 2, **caractérisé en ce que** le pourcentage en poids du sulfate de magnésium par rapport au sel à base de phosphore est situé entre 1 % et 45 %, en particulier entre 2,5 % et 15 %.

4. Panneau ignifuge selon l'une quelconque des revendications précédentes, **caractérisé en ce que** le pourcentage en poids du sel à base de phosphore par rapport à la matière contenant de la cellulose et à l'agent liant est situé entre 5 % et 20 %, en particulier entre 8 % et 15 %.

5. Panneau ignifuge selon l'une quelconque des revendications précédentes, **caractérisé en ce que** le panneau ignifuge appartient à la classe s1 de réaction au feu.

6. Panneau ignifuge selon l'une quelconque des revendications précédentes, **caractérisé en ce que** le sel à base de phosphore et/ou le sulfate de magnésium est/sont présent(s) dans le panneau, de manière essentielle, sous la forme d'une poudre.

7. Panneau ignifuge selon la revendication 6, **caractérisé en ce que** le sel à base de phosphore est présent dans le panneau, de manière essentielle, sous la forme d'une poudre ; et **en ce que** le sel à base de phosphore ou au moins la majeure partie du poids du sel à base de phosphore possède une granulométrie qui est située entre 50 et 2000 microns, en particulier entre 100 et 1000 microns.

8. Panneau ignifuge selon la revendication 6 ou 7, **caractérisé en ce que** le sulfate de magnésium est présent dans le panneau, de manière essentielle, sous la forme d'une poudre ; et **en ce que** le sulfate de magnésium ou au moins la majeure partie du poids du sulfate de magnésium possède une granulométrie qui est située entre 50 et 2000 microns, en particulier entre 100 et 1000 microns.

9. Panneau ignifuge selon l'une quelconque des revendications précédentes, **caractérisé en ce que** le sel à base de phosphore et le sulfate de magnésium sont présents dans le panneau, de manière essentielle, sous la forme d'une poudre ; et **en ce que** le sel à base de phosphore et le sulfate de magnésium sont présents dans le panneau, de manière essentielle, à l'état séparé l'un de l'autre.

10. Panneau ignifuge selon l'une quelconque des revendications 1 à 5, **caractérisé en ce que** le panneau est fabriqué en procurant le sel à base de phosphore et/ou le sulfate de magnésium en solution sur la matière qui contient de la cellulose.

11. Panneau ignifuge selon l'une quelconque des revendications précédentes, **caractérisé en ce que** l'agent liant comprend de la colle mélamine urée formaldéhyde (MUF), et en particulier est constitué de ladite colle pour sa majeure partie ou pour sa totalité.

12. Panneau ignifuge selon l'une quelconque des revendications précédentes, **caractérisé en ce que** le sel à base de phosphore est un sel de phosphate, de préférence le phosphate de monoammonium, le phosphate de diammonium ou le polyphosphate d'ammonium.

13. Procédé destiné à la fabrication d'un panneau ignifuge en conformité avec l'une quelconque des revendications précédentes, **caractérisé en ce que** l'agent liant et les retardateurs des flammes sont mis en contact avec la matière qui contient de la cellulose ; et la matière qui contient de la cellulose, de manière conjointe avec l'agent liant et les retardateurs des flammes, est comprimée.
